# EUROPÄISCHE PATENTSCHRIFT

(11) **EP 1 166 205 B1**
(45) Veröffentlichungstag und Bekanntmachung des Hinweises auf die Patenterteilung: **29.01.2003**
(21) Anmeldenummer: 00931011.1
(22) Anmeldetag: 05.04.2000
(51) Int. Cl.: G06F 11/00, G06F 11/28, G06F 11/16

(54) **VERFAHREN ZUM ERMITTELN DER POSITION EINES BESTIMMTEN BITS IN EINEM BITVEKTOR**
METHOD OF DETERMINING THE POSITION OF A GIVEN BIT IN A BIT VECTOR
PROCEDE POUR TROUVER LA POSITION D'UN BIT DETERMINE DANS UN VECTEUR DE BITS

(30) Priorität: 08.04.1999 DE 19915873
(43) Veröffentlichungstag der Anmeldung: 02.01.2002
(73) Patentinhaber: Infineon Technologies AG, 81669 München (DE)
(72) Erfinder: JENSEN, Karsten, D-01705 Freital (DE); HOBER, Peter, D-85521 Riemerling (DE)
(74) Vertreter: Reinhard - Skuhra - Weise & Partner
(86) Internationale Anmeldenummer: DE0001051
(87) Internationale Veröffentlichungsnummer: WO00062500

(56) Entgegenhaltungen:
- EP-A- 0 405 761
- US-A- 3 779 458
- US-A- 4 404 677

## Beschreibung

Die Erfindung betrifft ein Verfahren zum Ermitteln der Position eines bestimmten Bits in einem Bitvektor nach dem Oberbegriff von Patentanspruch 1.

In der Signalverarbeitung, der Protokollbearbeitung und der Telekommunikation werden Prozessoren benutzt, die serielle Bitströme verarbeiten. Meistens weisen die seriellen Bitströme eine bestimmte Rahmenstruktur auf. Ein serieller Bitstrom kann dabei aus aufeinanderfolgenden Bitvektoren beliebiger Länge bestehen; ein Bitvektor kann sich wiederum aus mehreren Teilbitvektoren zusammensetzen. Ein Prozessor zur Verarbeitung eines seriellen Bitstromes bzw. einer Folge von Bitvektoren tastet diese ab, und verzweigt abhängig von bestimmten Ereignissen, beispielsweise einem gesetzten Bit an einer bestimmten Position in der Rahmenstruktur, in eine Bearbeitungsroutine. Diese Form der Abtastung und Abarbeitung von seriellen Bitströmen durch einen Prozessor wird auch als ereignisorientierte Abarbeitung bezeichnet.

Ein besonderes Problem stellt dabei das Ermitteln der Position eines bestimmten Bits in einem Bitvektor dar. Beispielsweise kann eine Anforderung an den Prozessor darin bestehen, in einem oder mehreren Bitvektoren ausgehend von einer Bitposition in jedem der Bitvektoren das erste Bit, das den logischen Zustand 1 aufweist, zu finden und die Position dieses Bits als Ergebnis abzuspeichern. Übliche Prozessoren weisen in ihren Befehlssätzen keine besonderene Befehle zur Lösung des oben geschilderten Problems auf, Stattdessen ist zur Lösung des Problems eine je nach Prozessortyp mehr oder weniger aufwendige Befehlssequenz notwendig.

Zur Untersuchung eines Bitvektors mit 8 Bit muß ein Standardprozessor beispielsweise die folgende Programmroutine abarbeiten:

| | |
|---|---|
| Vektor = 0100 0000 | Der Bitvektor enthält den Wert Hex 40 |
| Position = 0000 0001 | Die Bitposition lautet Hex 01 |
| Pointer = 0000 0000 | Aktueller Stand des letzten gefundenen Ereignis |
| Ld Help, Pointer | Aktuellen Stand in Help-Register laden |
| And Help, 0000 0111 | Die niederwertigsten drei Bit isolieren |
| Add Help, 1 | Der Pointer enthält die letzte gefundene Position, die Suche beginnt daher an der darauffolgenden Stelle |
| Shl Position, Help | Links-Schieben zur Startposition der Suche |
| Start: | Sprungmarke |
| And Vektor, Position | Testen, ob an der Pointer-Position ein Bit gesetzt ist |
| Brnz A | Wenn ein Bit gesetzt ist, verzweige an die Sprungmarke A, ansonsten weiter im Programm |
| Shl Position, 1 | Nächste zu untersuchende Position |
| Brnz Start | Wenn alle Positionen untersucht sind, dann weiter im Programm, ansonsten Sprung zur Sprungmarke Start |
| Br B | Alle Positionen sind untersucht und kein gesetztes Bit, d.h. Ereignis, gefunden |
| A: | Sprungmarke: Verzweigung zur Ereignisverarbeitungsroutine wenn ein gesetztes Bit gefunden wurde |
| B: | Sprungmarke: Berarbeitung, wenn kein Ereignis gefunden wurde |

Dieses Beispiel stellt keine vollständige Lösung des Problems dar, zeigt aber, daß sehr viele Befehle und damit entsprechend viele Befehlszyklen zur Lösung des Problems notwendig sind.

Das der Erfindung zugrunde liegende technische Problem liegt daher darin, ein Verfahren zum Ermitteln der Position eines bestimmten Bits in einem Bitvektor anzugeben, wobei das Verfahren nur wenige Schritte aufweist.

Dieses Problem wird durch ein Verfahren mit den Merkmalen von Patentanspruch 1 gelöst.

Die Erfindung betrifft ein Verfahren zum Ermitteln der Position eines bestimmten Bits in einem Bitvektor, das die folgenden Schritte aufweist:
- Speichern des Bitvektor in einem ersten Register,
- Speichern einer Bitposition des Bitvektors in einem zweiten Register,
- Suchen eines Bits, das einen bestimmten logischen Zustand aufweist, in dem ersten Register ausgehend von der im zweiten Register gespeicherten Bitposition,
falls ein Bit mit dem bestimmten logischen Zustand gefunden wird:
- Beenden der Suche und Speichern der Position des Bits, das einen bestimmten logischen Zustand aufweist im zweiten Register,
sonst:
- Beenden der Suche und Speichern der Position des letzten Bits des Bitvektors im zweiten Register und Setzen eines ersten Signalbits.

Vorteilhafterweise ist dieses Verfahren in einem Prozessor als einzelner Befehl ausführbar, wodurch sich eine sehr effiziente Durchführbarkeit des Verfahrens ergibt.

In einer besonders bevorzugten Ausführungsform des Verfahrens wird ein zweites Signalbit und ein Zähler inkrementiert gesetzt, falls während der Suche des Bits, das einen bestimmten logischen Zustand aufweist, das letzte Bit im ersten Register erreicht wird. Damit wird angezeigt, daß das Ende des Bitvektors erreicht ist. Durch das zweite Signalbit wird eine schnelle Auswertung dieses Zustands beispielsweise zum Aufruf weiterer Programmroutinen ermöglicht. Durch Auslesen des Zählerstandes kann die Anzahl der Bitvektoren, die kein Bit mit dem bestimmten logischen Zustand aufweisen, festgestellt werden. Der Zähler ist insbesondere bei der aufeinanderfolgenden Untersuchung mehrerer Bitvektoren vorteilhaft. Im Zähler steht dann die Nummer des Bitvektors, der gerade durchsucht werden soll.

Bevorzugt erfolgt das Suchen des Bits, das einen bestimmten logischen Zustand aufweist, in dem ersten Register ausgehend von der im zweiten Register gespeicherten Bitposition in Richtung zum höchstwertigen Bit (MSB) des im ersten Register gespeicherten Bitvektors.

Alternativ kann das Suchen des Bits, das einen bestimmten logischen Zustand aufweist, in dem ersten Register ausgehend von der im zweiten Register gespeicherten Bitposition auch in Richtung zum niederwertigsten Bit (LSB) des im ersten Register gespeicherten Bitvektors erfolgen.

Weitere Vorteile, Merkmale und Anwendungsmöglichkeiten der Erfindung ergeben sich aus der nachfolgenden Beschreibung von Ausführungsbeispielen in Verbindung mit der Zeichung.

### In der Zeichnung zeigt:

- Figur 1: drei Ausführungsbeispiele des Verfahrens,
- Figur 2: ein viertes Ausführungsbeispiel des Verfahrens, und
- Figur 3: ein Blockschaltbild einer Vorrichtung zur Durchführung des Verfahrens.

Die im folgenden beschriebenen Ausführungsbeispiele des Verfahrens kommen bei einem Prozessorkern, der ein Protokoll an der ISDN -U-Schnittstelle verarbeitet, zum Einsatz. Dieser Prozessorkern ist als Protokollprozessor entwickelt worden, wobei insbesondere der Befehlssatz um besondere Befehle zur Protokollverarbeitung erweitert ist. Das erfindungsgemäße Verfahren wird von diesem Prozessor mit einem Befehl, der als FFS-Befehl bezeichnet wird, durchgeführt.

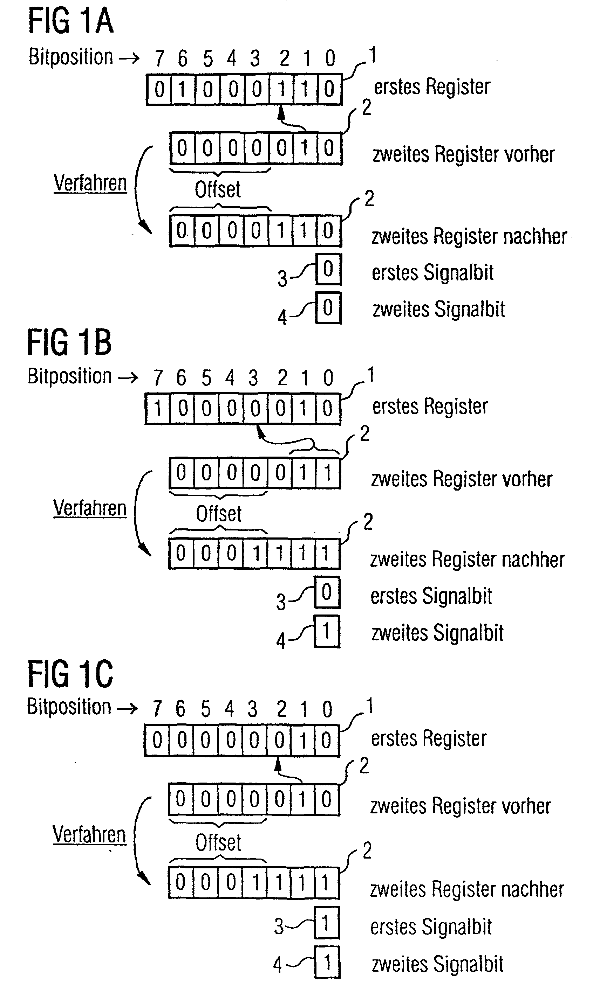

In Figur 1 ist unter a) ein erstes Ausführungsbeispiel des erfindungsgemäßen Verfahrens dargestellt. In einem ersten 8-Bit-Register 1 ist ein Bitvektor abgelegt, dessen Wert Hex 46 beträgt. In zweiten 7-Bit-Register 2 ist in den niederwertigen drei Bits eine Bitposition, die den Wert Hex 02 aufweist, abgelegt. Die höherwertigen vier Bits des 7-Bit-Registers 2 stellen einen Zähler dar (mit Offset bezeichnet). Ausgehend von der im zweiten 7-Bit-Register 2 abgelegten Bitposition Hex 02 beginnt gemäß dem Verfahren die Suche nach einem Bit des im ersten Register 1 abgelegten Bitvektors, das einen bestimmten logischen Wert - in diesem Bespiel logisch "1" - aufweist. Nach dem Verfahren wird an der Bitposition 6 des Bitvektors ein gesetztes Bit, d.h. eine logische "1", gefunden. Die Suche wird beendet, und die Bitposition 6 wird im zweiten Register 2 als Wert Hex 06 abgelegt. Ein erstes Signalbit und ein zweites Signalbit 4 bleiben ungesetzt, das heißt logisch "0", da bei der Suche ein gesetztes Bit gefunden wurde und nicht das Ende des Bitvektors bei der Suche erreicht wurde. Der Offset wird demnach auch nicht inkrementiert.

Unter b) ist ein zweites Ausführungsbeispiel des erfindungsgemäßen Verfahrens dargestellt. Im ersten 8-Bit-Register 1 ist ein Bitvektor mit Wert Hex 82 abgelegt. Im zweiten 7-Bit-Register 2 ist die Bitposition 3 als Wert Hex 03 abgelegt. Das Verfahren beginnt also an der Bitposition 3 des im ersten Register 1 abgelegten Bitvektors nach dem ersten gesetzten Bit des Bitvektors zu suchen. An der Bitposition 7 wird ein gesetztes Bit gefunden und die Suche beendet. Die Bitposition 7 wird in die drei niederwertigsten Bits des zweiten 7-Bit-Registers 2 gespeichert, gleichzeitig wird in das Offset der Offsetwert 1 geschrieben, da bei der Suche das Ende des Bitvektors erreicht wurde. Weiterhin bleibt das erste Signalbit 3 ungesetzt; das zweite Signalbit 4, das anzeigt, daß bei der Suche das letzte Bitvektors gefunden wurde, wird dagegen gesetzt.

Unter c) ist ein drittes Ausführungsbeispiel des erfindungsgemäßen Verfahrens dargestellt, wobei im ersten 8-Bit-Register 1 ein Bitvektor mit dem Wert Hex 02 abgelegt ist. Im zweiten 7-Bit-Register 2 ist die Bitposition Hex 02 abgelegt. Gemäß dem Verfahren beginnt die Suche nach einem gesetzten Bit an der Bitposition 2 des im ersten Register 1 abgelegten Bitvektors. Die Suche endet bei Erreichen des letzten Bits an der Bitposition 7 des Bitvektors, ohne daß ein gesetztes Bit gefunden wurde. Demnach wird im zweiten Register 2 in den drei niederwertigen Bits die Bitposition 7 und in den vier höherwertigen Bits - dem Offset - 1 gespeichert. Weiterhin wird das erste Signalbit 3 und das zweite Signalbit 4 gesetzt, um anzuzeigen, daß das Ende des Bitvektors bei der Suche erreicht wurde und kein gesetztes Bit gefunden wurde.

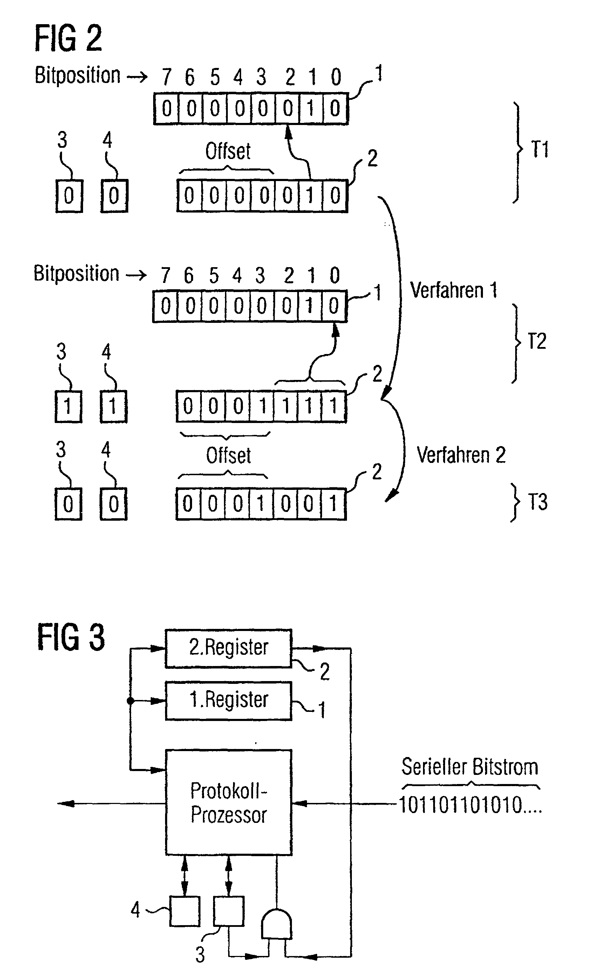

In Figur 2 ist ein Ausführungsbeispiel dargestellt, bei dem das Verfahren aufeinanderfolgend auf einen ersten und zweiten Bitvektor durchgeführt wird. Zum Zeitpunkt T1 steht in dem 8-Bit-Register 1 der Wert Hex 02 entsprechend dem ersten Bitvektor. In dem zweiten 7-Bit-Register 2 steht die Bitposition Hex 02. Das erste Signalbit 3 und das zweite Signalbit 4 sind nicht gesetzt. Die Suche beginnt an der Bitposition 2 des im ersten Register 1 abgelegten ersten Bitvektors und endet an der Bitposition 7 des im ersten Register 1 abgelegten ersten Bitvektors, wobei kein gesetztes Bit gefunden wurde und des Ende des Bitvektors erreicht wurde. Demnach wird zum Zeitpunkt T2 das Signalbit 3 und das Signalbit 4 gesetzt, um anzuzeigen, daß bei der Suche das Ende des ersten Bitvektors erreicht und keine gesetztes Bit ausgehend von der im zweiten Register 2 abgelegten Bitposition gefunden wurde. Im zweiten Register 2 wird die Bitposition 7 des letzten Bits des Bitvektors in den drei niederwertigsten Bits und als Offset 1 in die vier höchstwertigen Bits des zweiten Registers abgelegt. Der Offset zeigt somit auf den nächsten, den zweiten Bitvektor. Der zweite Bitvektor, der identisch mit dem ersten Bitvektor ist, wird in das erste Register geladen. Die Suche beginnt nun an der Bitposition 0 des im ersten Register 1 abgelegten zweiten Bitvektors. Die Suche endet an der Bitposition 1 des zweiten Bitvektors, da das dort stehende Bit gesetzt ist. Zum Zeitpunkt T3 wird das erste Signalbit 3 und das zweite Signalbit 4 zurückgesetzt, da das Ende des zweiten Bitvektors bei der Suche nicht erreicht wurde und ein gesetztes Bit an der Bitposition 1 gefunden wurde. Die Bitposition 1 wird in den niederwertigsten 3 Bit des zweiten Registers 2 gespeichert. Der Offset bleibt auf 1 stehen, womit angezeigt wird, daß sich die gefundene Bitposition eines gesetzten Bits auf den zweiten Bitvektor bezieht.

Figur 3 stellt ein Blockschaltbild einer Einrichtung zur Durchführung des Verfahrens dar. Ein Protokollprozessor empfängt einen seriellen Bitstrom, der eine Rahmenstruktur, die sich aus aufeinanderfolgenden gleich langen Bitvektoren zusammensetzt, auf. Der Protokollprozessor führt einen Befehl zur Durchführung des Verfahrens aus, wobei der Befehl einen zu untersuchenden Bitvektor im ersten Register 1 speichert und einen Bitposition im zweiten Register 2 speichert. Der Befehl führt das Verfahren aus, so daß im zweiten Register 2 die Bitposition des gesetzten Bits gespeichert wird und bei einem gefundenen gesetzten Bit das erste Signalisierungsbit 3 gesetzt wird. Durch eine UND-Verknüpfung des ersten Signalisierungsbits 3 und des Inhalts des zweiten Registers 2 kann der Protokollprozessor feststellen, ob an einer bestimmten Bitposition des Bitvektors ein Bit gesetzt ist oder nicht. Abhängig davon kann der Protokollprozessor besondere Routinen zur Durchführung weiterer Verfahren starten.

## Patentansprüche

1. Verfahren zum Ermitteln der Position eines bestimmten Bits in einem Bitvektor mit den folgenden Schritten:
- Speichern des Bitvektors in einem ersten Register,
- Speichern einer Bitposition des Bitvektors in einem zweiten Register,
- Suchen eines Bits, das einen bestimmten logischen Zustand aufweist, in dem ersten Register ausgehend von der im zweiten Register gespeicherten Bitposition,
falls ein Bit mit dem bestimmten logischen Zustand gefunden wird:
- Beenden der Suche und Speichern der Position des Bits, das einen bestimmten logischen Zustand aufweist, im zweiten Register,
sonst:
- Beenden der Suche und Speichern der Position des letzten Bits des Bitvektors im zweiten Register und Setzen eines ersten Signalbits.

2. Verfahren nach Anspruch 1,
**dadurch gekennzeichnet, daß**
falls während der Suche des Bits, das einen bestimmten logischen Zustand aufweist, das letzte Bit im ersten Register erreicht wird, ein zweites Signalbit gesetzt und ein Zähler inkrementiert wird.

3. Verfahren nach Anspruch 1 oder 2,
**dadurch gekennzeichnet, daß**
das Suchen des Bits, das einen bestimmten logischen Zustand aufweist, in dem ersten Register ausgehend von der im zweiten Register gespeicherten Bitposition in Richtung zum höchstwertigen Bit (MSB) des im ersten Register gespeicherten Bitvektors geht.

4. Verfahren nach Anspruch 1 oder 2,
**dadurch gekennzeichnet, daß**
das Suchen des Bits, das einen bestimmten logischen Zustand aufweist, in dem ersten Register ausgehend von der im zweiten Register gespeicherten Bitposition in Richtung zum niederwertigsten Bit (LSB) des im ersten Register gespeicherten Bitvektors geht.

## Claims

1. Method for determining the position of a specific bit in a bit vector, having the following steps:
- storing the bit vector in a first register,
- storing a bit position of the bit vector in a second register,
- seeking a bit which has a specific logic state in the first register, starting from the bit position stored in the second register,
if a bit with the specific logic state is found:
- ending the search and storing in the second register the position of the bit which has a specific logic state,
otherwise:
- ending the search and storing the position of the last bit of the bit vector in the second register, and setting a first signal bit.

2. Method according to Claim 1, **characterized in that** if the last bit in the first register is reached during the search for the bit which has a specific logic state, a second signal bit is set and a counter is incremented.

3. Method according to Claim 1 or 2, **characterized in that** the search for the bit which has a specific logic state proceeds in the first register starting from the bit position, stored in the second register, in the direction of the most significant bit (MSB) of the bit vector stored in the first register.

4. Method according to Claim 1 or 2, **characterized in that** the search for the bit which has a specific logic state proceeds in the first register starting from the bit position, stored in the second register, in the direction of the least significant bit (LSB) of the bit vector stored in the first register.

## Revendications

1. Procédé pour trouver la position d'un bit déterminé dans un vecteur de bits, qui comporte les étapes suivantes :
- mémoriser le vecteur de bits dans un premier registre,
- mémoriser une position binaire du vecteur de bits dans un second registre,
- rechercher un bit, qui présente un état logique déterminé, dans le premier registre en partant de la position binaire mémorisée dans le second registre,
au cas où l'on trouve un bit avec l'état logique déterminé :
- mettre fin à la recherche et mémoriser la position du bit, qui présente un état logique déterminé, dans le second registre,
autrement :
- mettre fin à la recherche et mémoriser la position du dernier bit du vecteur de bits dans le second registre et activer un premier bit de signalisation.

2. Procédé selon la revendication 1, **caractérisé en ce que**, au cas où, pendant la recherche du bit qui présente un état logique déterminé, le dernier bit est atteint dans le premier registre, un deuxième bit de signalisation est activé et un compteur incrémenté.

3. Procédé selon la revendication 1 ou 2, **caractérisé en ce que** la recherche du bit, qui présente un état logique déterminé, se fait dans le premier registre à partir de la position binaire mémorisée dans le second registre vers le bit le plus significatif (MSB) du vecteur de bits mémorisé dans le premier registre.

4. Procédé selon la revendication 1 ou 2, **caractérisé en ce que** la recherche du bit, qui présente un état logique déterminé, se fait dans le premier registre à partir de la position binaire mémorisée dans le second registre également vers le bit le moins significatif (LSB) du vecteur de bits mémorisé dans le premier registre.
